# EUROPEAN PATENT SPECIFICATION

(11) **EP 3 426 525 B1**
(45) Date of publication and mention of the grant of the patent: **19.02.2020**
(21) Application number: 17715252.7
(22) Date of filing: 09.03.2017
(51) Int. Cl.: B60R 13/04, B60R 19/26

(54) **VEHICLE BUMPER COVER COUPLING**
FAHRZEUGSTOSSFÄNGERABDECKUNGSKOPPLUNG
ACCOUPLEMENT DE REVÊTEMENT DE PARE-CHOCS DE VÉHICULE

(30) Priority: 10.03.2016 GB 201604111
(43) Date of publication of application: 16.01.2019
(73) Proprietor: Bentley Motors Limited, Crewe, Cheshire CW1 3PL (GB)
(72) Inventor: PEEL, Graham, Crewe Cheshire CW2 8FB (GB)
(74) Representative: Wilson Gunn
(86) International application number: PCT/GB2017/050629
(87) International publication number: WO 2017/153756

(56) References cited:
- EP-A1- 2 228 265
- WO-A1-2012/173248
- US-A1- 2005 190 573
- US-B1- 8 517 442

## Description

### Technical Field of the Invention

The present invention relates to a coupling for coupling a bumper cover to a trim element attached to a vehicle, and particularly to a coupling arranged to release the bumper cover from the trim element after the bumper cover receives an impact force above a predetermined level, for example after a collision with an object.

### Background to the Invention

A bumper is a protruding structure typically attached to, or integrated into, the front or rear of a vehicle to absorb impact in a low-speed collision with a pedestrian or with another vehicle, thereby improving safety. Bumpers are also used to reduce vehicle repair costs since they are usually constructed from a cheaper material than other components of the vehicle.

Conventional bumpers comprise a bumper cover connected to a solid bumper beam. An air gap is usually provided in between the bumper cover and the bumper beam to allow the bumper cover to displace towards the bumper beam to absorb an impact. In addition, the bumper beam may be provided with foam covering to further absorb impact.

Bumper covers are usually attached to the vehicle by using a plurality of bolts threaded through the bumper cover and into fixings formed in the bumper beam. This arrangement makes it difficult to align the bumper cover with a decorative trim element of the vehicle, such as a radiator shell or radiator grille. This misalignment is not aesthetically pleasing and is therefore undesirable in a luxury car.

US8,517,442B1 discloses a vehicle trim attachment fastener including a base, a trim clip and a first trim alignment flange. The base has a vehicle body attachment structure. The trim clip extends outwardly away from a first end of the base and includes a plurality of attachment fingers defining a trim panel retaining area therebetween. The first trim alignment flange extends outwardly from one of the plurality of attachment fingers away from the trim panel retaining area. The first trim alignment flange defines a trim alignment aperture and is configured to align a trim panel relative to the trim clip during installation of the trim panel to the trim clip.

EP2228265A1 discloses an apparatus for mounting a fascia to a vehicle comprises: a first retainer disposed on one of the fascia or the vehicle; a second retainer disposed on the other of the fascia or the vehicle; a first tapered aperture associated with second retainer; and a second tapered aperture associated with first retainer. First retainer co-operates with first tapered aperture to locate fascia in a pre-determined position in first and second directions relative to the vehicle; while second retainer is arranged to co-operate with second tapered aperture to locate fascia in a pre-determined position in a third direction relative to the vehicle. First aperture and second retainer may be part of a mount bracket for a headlight or body panel. Fascia may be a bumper fascia.

WO2012/173248A1 discloses a radiator grille clip for attaching a radiator grille to a vehicle, the radiator grille clip being constituted by: a first clip provided at one end thereof with a grille mating portion for assembly to a mounting portion furnished to the radiator grille; and a second clip provided with an assembly portion for attachment to a bracket furnished to the vehicle, and a mating portion that mates with the first clip.

US2005/0190573A1 discloses a device for releasably fastening a first component to a second component includes a device body, a first fastener extending from the device body and operable to attach the device body to the first component, and a second fastener extending from the device body and adapted to attach the device to the second component. When a force of greater than a predetermined amount is applied to the second component, the first fastener detaches from the first component without damaging the first component. Preferably, the first component is a vehicle headlamp assembly and the second component is a bumper fascia. The first and second fasteners of the device body accurately position the fascia relative to said headlamp assembly and securely hold the fascia at a location near a lamp lens.

Embodiments of the present invention seek to address the above problem.

### Summary of the Invention

According to a first aspect of the present invention, there is provided a vehicle according to claim 1.

In this way, the present invention provides an arrangement in which a bumper cover is attached to a trim element, such as a radiator shell, by one or more releasable couplings that are configured to release the bumper cover from its engagement with the trim element as the bumper cover absorbs impact during a collision. The force of a low-speed collision is substantially absorbed by the release and displacement of the bumper cover from the trim element, and is therefore not transferred from the bumper cover to the more delicate and expensive trim element. The trim element thus remains substantially undamaged, which decreases repair costs and repair time after a collision. Accordingly, this reduced likelihood of damage to the trim element during a collision allows for the bumper cover to be attached very closely to the trim element, which provides an aesthetically pleasing alignment between the bumper cover and trim element, whilst enabling the vehicle to comply with low speed impact testing regulations that specify no other part of the vehicle can be damaged other than the part contacted by the test impactor.

Furthermore, the detachment of the bumper cover from the trim element offers various improvements in safety. For example, there is less separation of surface materials such as paints and polymeric coatings from the bumper cover because the bumper cover can better absorb the impact by releasing and displacing from the trim element instead of just deforming. In addition, the safety of a pedestrian struck by the vehicle is improved. It has been found that lower limb injuries are the most common injuries suffered by a pedestrian in a collision with a vehicle and the present invention mitigates these injuries since the decoupling of the bumper cover from the trim element absorbs some of the impact of the collision.

The provision of a hole for receiving a bumper cover attachment means, makes it possible to attach the coupling to the bumper cover or a part connected to the bumper cover rigidly, for example, with a screw. This of course allows very tight control of location, with little or no room for movement between the coupling and the bumper cover.

The provision of a resilient tooth arranged within and a mouth having an opening to engage with part of the trim element and capable of flexing and bending into the recess means that the remainder of body itself (other than the resilient tooth) can be stiff, restricting/preventing relative movement between the bumper cover, which is fixed to the hole and the trim element, which is engaged by the mouth. In consequence, the coupling can provide for little or no movement between the bumper cover and the trim element in the (substantially) vertical direction (assuming the vehicle is on a horizontal surface).

The vehicle may be a motor vehicle. In particular, the motor vehicle may be an automobile. The vehicle may comprise a bumper beam to absorb impact force from the bumper cover. The vehicle may comprise a foam covering mounted to the bumper beam or bumper cover to further absorb impact force.

The trim element may comprise a radiator shell for supporting a radiator grille. The radiator shell may comprise one or more slots, each for receiving a coupling.

The bumper cover may be coupled to any suitable part of the trim element. In particular, the bumper cover may be coupled to the radiator shell, the radiator grille, or a part thereof.

The bumper cover may be a front bumper cover, which may be attached to the front of the vehicle. The bumper cover may be a rear bumper cover, which may be attached to the rear of the vehicle. Indeed, the vehicle may comprise both a front bumper cover and a rear bumper cover that are each coupled to a trim element by one or more couplings. The bumper cover may protrude beyond the distal end of the trim element so that it is the first part of the vehicle to contact an object and receive an impact during a collision.

The vehicle may comprise a plurality of couplings. Each bumper cover may be releasably attached to the trim element by multiple couplings. In this way, the force of a collision may be spread to multiple couplings, which reduces the damage done to the trim element and the couplings during separation of the bumper cover from the trim element. This may allow for the trim element and/or couplings and/or the bumper cover to be re-used after a collision, with minimal repair costs.

Each coupling may be configured to detach from the trim element after the bumper cover receives an impact force above a predetermined level that corresponds to a low-speed collision. In this way, the bumper cover is not accidentally released from the trim element when a very small force is applied to it.

The body may be substantially cuboidal. The body may be provided with reinforcing members. The reinforcing members may be reinforcing ribs. The reinforcing ribs may be arranged such that the relative position and orientation of the mouth and the hole are fixed. This may prevent/restrict relative movement between the bumper cover and the trim element in the vertical direction (assuming the vehicle is on a horizontal surface) and may restrict movement between the bumper cover and the trim element to the fore/aft direction (when sufficient impact force is applied to detach the coupling from the trim element) The hole may be oriented orthogonally to the mouth. The bumper cover attachment means may be a connector, for example a screw.

The vehicle may further comprise a bumper cover attachment strip for attaching the bumper cover to the one or more couplings. The bumper cover attachment strip may comprise one or more, or a plurality, of slots for receiving the bumper cover attachment means. Thus, each coupling may be fixably attached to the bumper cover attachment strip by the bumper cover attachment means. The bumper cover attachment strip may be oriented substantially parallel to the radiator grille. The bumper cover attachment strip may comprise an engagement formation for receiving and mating with a part of the bumper cover to secure the bumper cover to the bumper cover attachment strip. The engagement formation may comprise an integrally formed connector.

The mouth of each coupling may be substantially U-shaped. The first surface and second surface of the mouth may be arranged with a predetermined gap that corresponds to the thickness of a part of the trim element. The mouth may be shaped to guide an object into the mouth.

Each coupling may comprise one or more projections for contacting with the trim element, Each projection may be housed in the mouth of the coupling. In particular, the mouth may house two projections. Each projection may be mounted to the first surface of the mouth. Each projection may comprise a guide portion for guiding a part of the trim element further into the mouth. The guide portion may be curved. Each projection may be oriented such that its guide portion faces out of the opening of the mouth. When two projections are provided, they may be arranged oppositely about the central axis of the coupling. The projections may extend in a plane orthogonal to the hole.

The tooth may engage with a corresponding slot provided in the trim element. When two projections are provided on the first surface of the mouth, the tooth may sit in between the two projections. The tooth may be positioned in along the central axis of the coupling. The tooth may be formed from a resilient material. The body may be formed of a resilient material (such as glass filled polypropylene) which may also be stiff, thus it may form a body which is stiff apart from in the region where the tooth joins the body, to allow the tooth to be resilient. The tooth may be able to recoil back into its original shape after bending. The resilient tooth may flex, with the free end pivoting about the attached end. The tooth may extend in a plane orthogonal to the hole. In this way, the tooth may flex when force is applied to it, which may enlarge the opening of the mouth so that the mouth can more easily engage with the trim element.

The coupling may be arranged so that when the coupling is attached to the trim element, the first engagement portion may be located closer to the trim element than the second engagement portion. In this way, the coupling may be arranged so that the tooth may flex to enlarge the opening of the mouth opening when either the first engagement portion or the second engagement portion is acted upon. Since the curve of the second engagement portion is steeper than the curve of the first engagement portion, the force required to bend the tooth and expand the mouth opening by acting on the second engagement portion is greater than the force required to bend the tooth and expand the mouth opening by acting on the first engagement portion.

### Detailed Description of the Invention

In order that the invention may be more clearly understood an embodiment thereof will now be described, by way of example only, with reference to the accompanying drawings, of which:
- Figure 1: is a front view of a vehicle according to an embodiment of the invention;
- Figure 2: is a rear view of the vehicle shown in Figure 1;
- Figure 3: is a perspective view of the front bumper cover and the radiator shell of the vehicle shown in Figures 1 and 2;
- Figure 4: is a perspective cross-section view of the front bumper arrangement of the vehicle shown in Figures 1 and 2, showing a coupling connecting the front bumper cover to the radiator shell via a front bumper attachment strip;
- Figure 5: is a perspective rear view of the connection between the coupling and the radiator shell shown in Figure 3, but with the front bumper cover and bumper cover attachment strip omitted for clarity.
- Figure 6: is a perspective rear view of the assembly shown in Figure 5, but with the bumper cover attachment strip shown;
- Figure 7: is a perspective view of a coupling according to an embodiment of the invention;
- Figure 8: is a side view of the coupling shown in Figure 7;
- Figure 9: is a rear view of the coupling shown in Figure 7; and
- Figure 10: is a front view of the coupling shown in Figure 7.

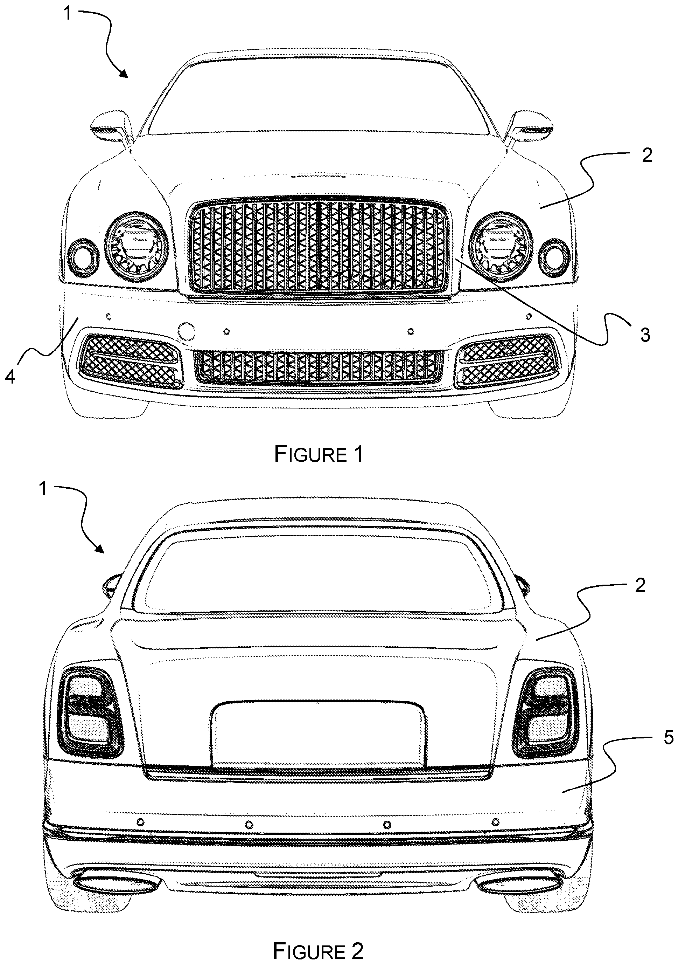

Referring to Figures 1 and 2, a vehicle 1 comprises a body and a trim element 2. A front bumper cover 4 and a rear bumper cover 5 are connected to the trim element 2. In this embodiment, the front bumper cover 4 is specifically coupled to the radiator shell 3 of the trim element 2.

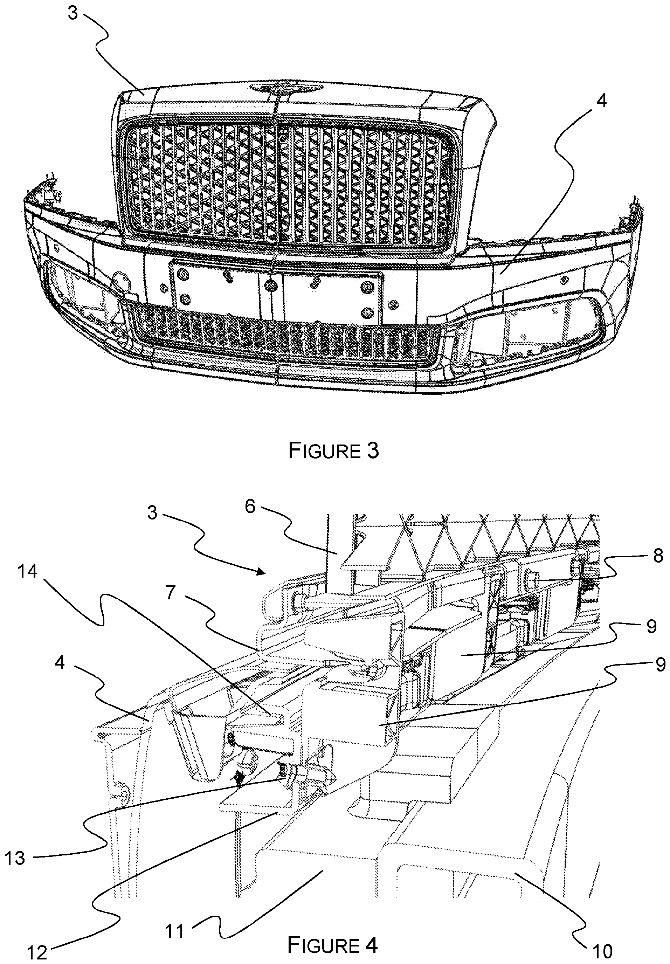

Referring to Figure 3, the radiator shell 3 and the front bumper cover 4 of Figures 1 and 2 are shown separated from the vehicle 1. The front bumper cover 4 is releasably attached at a top surface to a bottom surface of the radiator shell 3 by using a releasable coupling 9 (hidden by the view shown in Figure 3).

Referring to Figure 4, the radiator shell 3 supports a decorative radiator grille 6 and comprises a base 7. A lower surface of the grille 6 is connected to an upper surface of the base 7 by a grille attachment means, which in this embodiment is a bolt 8.

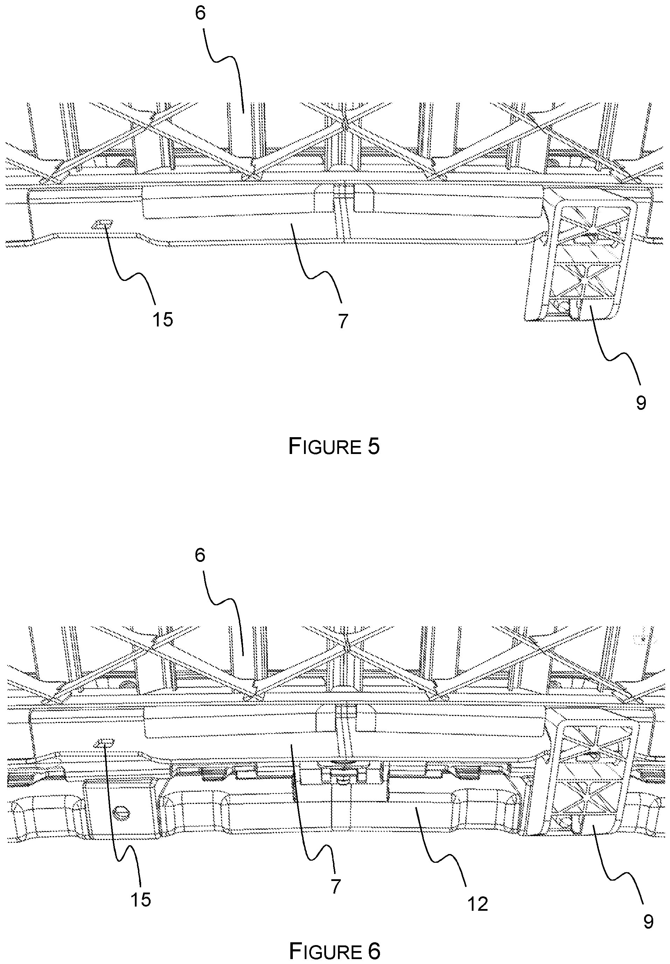

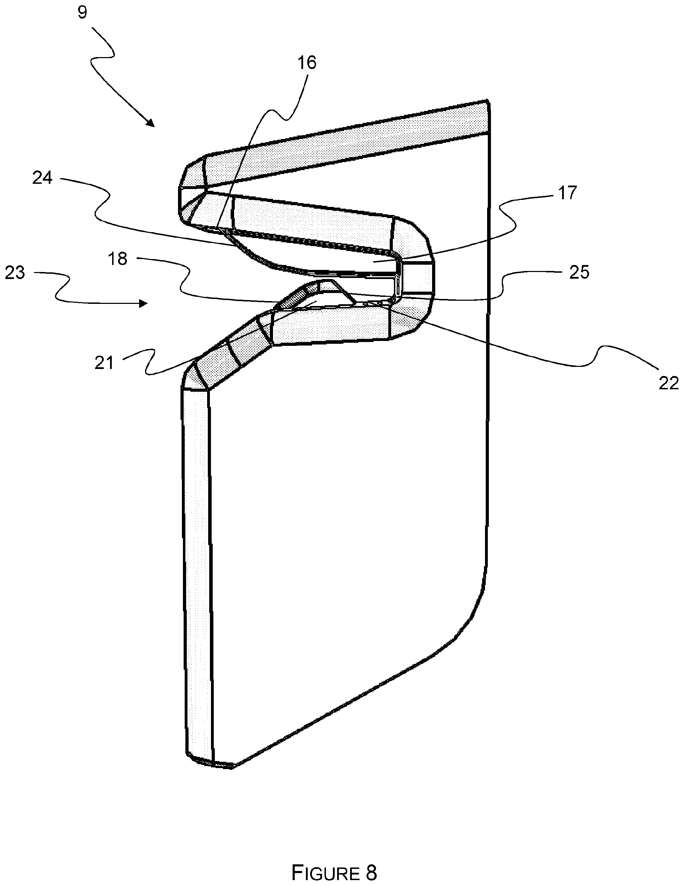

Referring the Figure 4, the front bumper arrangement of the vehicle 1 comprises an integral bumper beam 10 with a foam covering 11 mounted thereto. A plurality of releasable couplings 9 are each releasably coupled, or clipped, to the base 7 of the radiator shell 3. A bumper cover attachment strip 12 is connected to each of the plurality of releasable couplings 9 by using respective bumper cover attachment means, which in this embodiment are connectors 13. Further details of the releasable coupling 9 are shown in Figures 6-9 and described with reference to these Figures below. The front bumper cover 4 is then fitted to the bumper cover attachment strip 12. The connectors 13 support the bumper cover attachment strip 12, which provides support to the front bumper cover 4 to prevent it from sagging away from the radiator shell 3 and the grille 6. Thus, the front bumper cover 4 is aligned with the radiator shell 3 and the grille 6 to produce an aesthetically pleasing look.

Referring to Figure 5, the base 7 of the radiator shell 3 comprises one or more slots 15 formed in its (substantially horizontal) surface. Each slot 15 is substantially rectangular and is arranged to receive a releasable coupling 9 to couple the attached front bumper cover 4 to the base 7 of the radiator grille 6.

Referring to Figure 6, the bumper attachment strip 12 is shown connected to the coupling 9, which is coupled to the base 7 of the radiator grille 6.

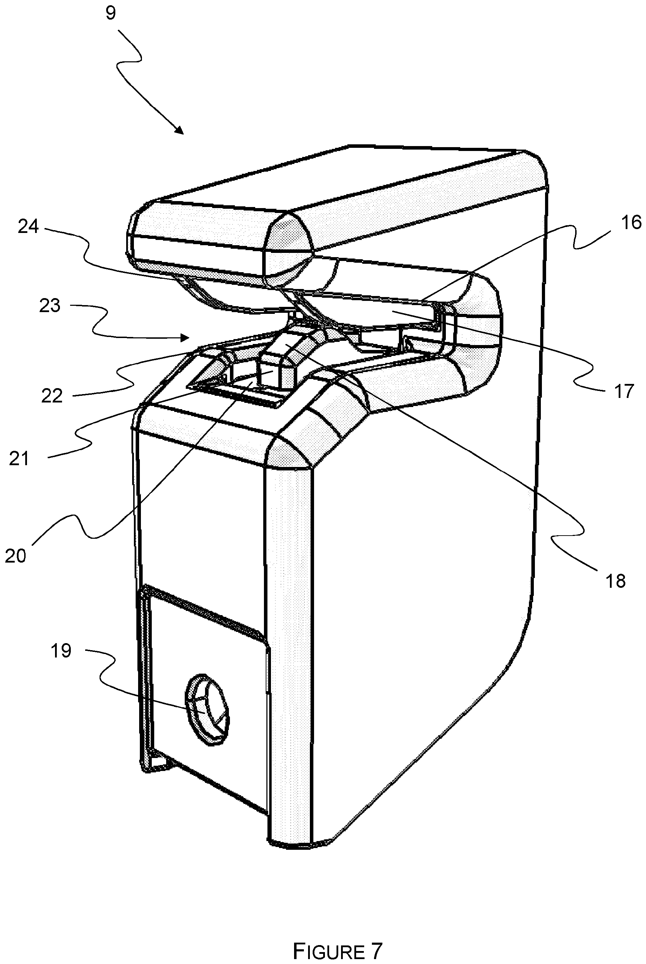

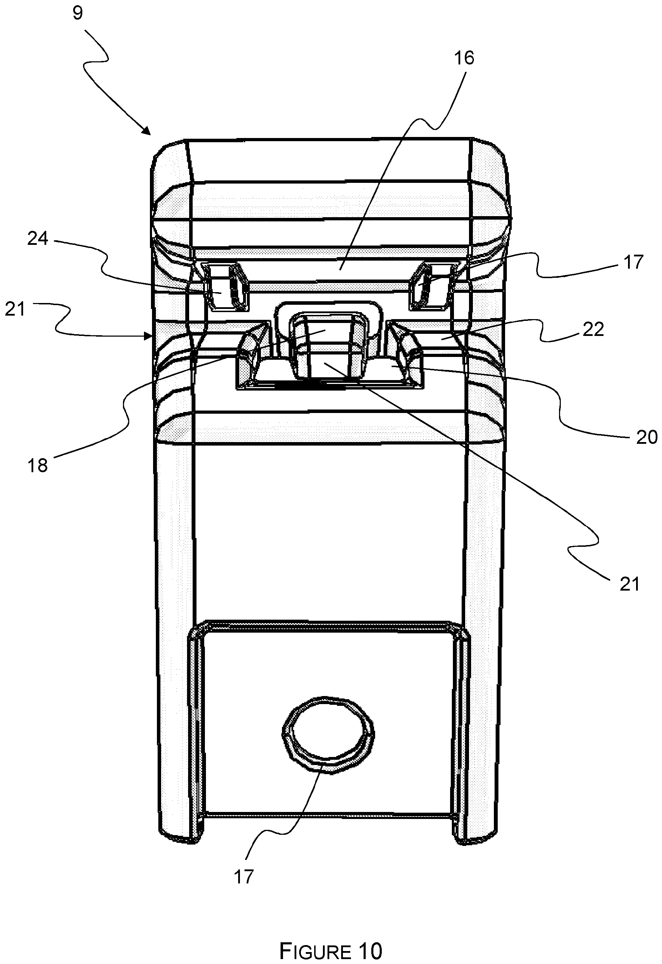

Referring to Figures 7-10, a releasable coupling 9 comprises a substantially cuboidal body and a substantially U-shaped mouth 23 for engaging with a slot 15 on the base 7 of the radiator shell 3. The U-shaped mouth 23 comprises an upper support surface 16 and a lower support surface 22. The lower support surface 22 comprises a recess 20 formed within it. Each part of the coupling 9 is formed from a resilient material such as a polymer, for example glass reinforced polypropylene.

Two projections 17 are integrally formed on an upper surface of the mouth 23. Each of the projections 17 has a curved guide portion 24 that faces out of the opening of the mouth 23. The projections 17 are positioned parallel to one another on the upper surface of the mouth 23.

The coupling 9 further comprises a tooth 21 that sits in the mouth 23 between the projections 17. The tooth 21 is attached to the lower support surface 22 of the mouth 23 at only at one end and the other end of the tooth 21 is free. The tooth 21 is thus attached to the coupling 9 so that its free end may flex in the vertical direction about the attached end. The recess is arranged to provide space to allow the free end of the tooth 21 to flex. The tooth 21 has a shaped upper surface that faces the upper support surface 16 of the mouth 23. The shaped upper surface comprises a curved first engagement portion 18 located towards the opening of the mouth 23 and a curved second engagement portion 25 located towards the rear of the mouth 23. The curve of the first engagement portion 18 is shallower than the curve of the second engagement portion 25. Thus, the curve of the second engagement portion 25 is steeper than the curve of the first engagement portion 18.

The U-shaped mouth 23, and in particular, the gap between the projections 17 and the lower support surface 22, is configured to match the thickness of the base 7 of the radiator shell 3. The gap between the projections 17 and the tooth 21 is configured to be smaller than the thickness of the base 7 of the radiator shell 3 (in which the slots 15 are formed).

The coupling 9 further comprises a hole 19 on a front face for receiving the bumper cover attachment means 12. The hole 19 is formed orthogonally to the U-shaped mouth 23, to the tooth 21 and to the projections 17.

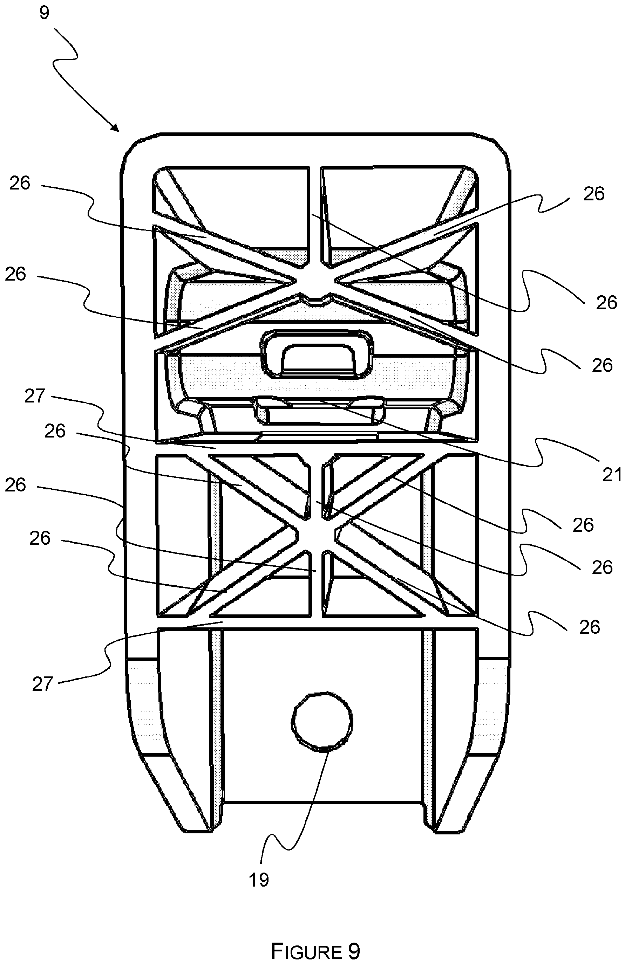

The coupling 9 is stiff and rigid apart from in the region where the tooth 21 is connected (at which point the resilience of the polymer allows for the tooth to flex and bend). At the rear of the coupling 9 as shown in figure 9, a series of reinforcing ribs 26 are provided, extending between the outer walls of the substantially cuboid body and between a pair of bracing walls 27, in order to maintain the stiffness and rigidity of the coupling 9.

To install the front bumper cover 4 to the trim element 2, each coupling 9 is first fixed to the base 7 of the radiator shell 3 by engaging the couplings 9 with their corresponding slots 15 formed therein, as shown in Figure 5.

In particular, as the mouth 23 of a releasable coupling 9 is pulled towards its slot 15, the two projections 17 contact the base 7 and guide it into the mouth 23 where it contacts with the first engagement portion 18. This forces the tooth 21 to flex so that its free end is pushed downwards, into the recess 20, which enlarges the opening of the mouth 23 and thus allows the base 7 to be received into the coupling 9. As the slot 15 passes over the tooth 21, the tooth 21 is released and its free end flexes upwards, out of the recess 19, and reverts to its original relaxed position. This closes the mouth 23 and secures the coupling 9to the radiator shell 3.

The bumper cover attachment strip 12 is secured to each of the releasable couplings 9 by using the connectors 13, e.g. screws, as shown in Figure 6.

The front bumper cover 4 is then fitted/clipped to the bumper cover attachment strip 12 by using an engagement means, such as an integrally formed connector 14, as shown in Figure 3. The front bumper cover 4 is thus releasably coupled to the vehicle in such a way that it is not in contact with the bumper beam 10.

In this arrangement, there is an air gap between the front bumper cover 4 and the foam covering 11 to allow the front bumper cover 4 to displace towards the bumper beam 10. Furthermore, the front bumper cover 4 is coupled to the radiator shell 3 so that it is closely aligned with the radiator shell 3 to provide an aesthetically pleasing look.

Each coupling 9 is configured to release from the radiator shell 3 only when a significant decoupling force is applied to the front bumper cover 4, which must exceed a predetermined level of force, i.e. a threshold level. The steep curve of the second engagement portion 25 requires a relatively high level of force to flex the free end of the tooth 23 and decouple the coupling 9 from the base 7, compared to the level of force required to couple the coupling 9 to the base 7. This prevents accidental decoupling and retains the front bumper cover 4 in the desired position, aligned with the radiator shell 3.

However, if the vehicle 1 is in a minor collision with an object such as another vehicle or a pedestrian then a significant force may be applied to the front bumper cover 4 since it protrudes outwards beyond vehicle the trim element 2. This force causes the front bumper cover 4 to decouple from the base 7 of the radiator shell 3.

In particular, when the vehicle 1 collides with an object as it is driven forwards, a significant force is applied to the front bumper cover 4. The force applied to the front bumper cover 4 thus causes it, and each coupling 9, to move relative to the base 7. Within each coupling, this relative movement depresses the free end of the resilient tooth 21 and enlarges the opening of the mouth 23, which allows the coupling 9 to pass over the second engagement portion 25 and escape from the slot 15 in the base 7. Consequently, the front bumper cover 4 is released from the base 7 and displaces towards the bumper beam 10, through the air gap, which absorbs some of the impact force. The front bumper cover 4 then strikes the foam covering mounted to the bumper beam 10, which also absorbs some of the impact force. The release of the front bumper cover 4 allows the vehicle to absorb the force of the impact during the collision, without it transferring to the radiator shell 3 or any other part of the trim element. This reduces damage to the radiator shell and the trim element and consequently reduces repair costs.

The above embodiment is described by way of example only. Many variations are possible without departing from the scope of the invention as defined in the appended claims.

For example, although the above embodiment is described with reference to coupling the front bumper cover 4 to the radiator shell 3 of the vehicle 1, it is noted that the rear bumper cover 5 may also be coupled to, and released from, any suitable part of the trim element 2 in the same manner.

## Claims

1. A vehicle (1) comprising:
A decorative trim element (2);
a bumper cover (4,5); and
one or more couplings (9),
wherein each coupling (9) releasably couples the bumper cover (4,5) to the trim element (2) so as to align the bumper cover (4,5) to the trim element and each coupling (9) is arranged to release the bumper cover (4,5) from the trim element (2) when the bumper cover (4,5) receives an impact force above a predetermined level; the or each coupling (9) comprising a body, and the body comprising:
a hole (19) for receiving a bumper cover attachment means (13) to attach the coupling (9) to the bumper cover (4,5) or a part connected to the bumper cover (4,5); and
a mouth (23) having an opening to engage with part of the trim element (2) and comprising a first surface (16) and an opposing second surface (22),
a recess (20) formed in the second surface (22), and
a resilient tooth (21) for engaging with the trim element (2), wherein the tooth (21) is attached at one end to the coupling (9) and has a free end which can flex and bend into the recess (20); wherein the tooth (21) comprises a shaped surface for contacting a part of the trim element; the shaped surface comprises a first engagement portion (18) and a second engagement portion (25); the first and second engagement portions (19,25) are curved; and the curve of the second engagement portion (25) is steeper than the curve of the first engagement portion (18).

2. A vehicle (1) according to claim 1, wherein the trim element (2) comprises a radiator shell (3) and the bumper cover (4,5) is attached to the radiator shell (3).

3. A vehicle (1) according to any preceding claim, wherein the bumper cover (4,5) is a front bumper cover (4).

4. A vehicle (1) according to any preceding claim, wherein the bumper cover (4,5)protrudes beyond the distal end of the trim element (2).

5. A vehicle (1) according to any preceding claim, further comprising a plurality of couplings (9).

6. A vehicle (1) according to any preceding claim, wherein the bumper cover (4,5) is attached to the trim element (2) by multiple couplings (9).

7. A vehicle (1) according to any preceding claim wherein the bumper cover (4,5), or the part connected to the bumper cover (4,5) is attached to the hole (19) by a screw.

8. A vehicle (1) according to any preceding claim, wherein the mouth (23) is substantially U-shaped.

9. A vehicle (1) according to any preceding claim, wherein the first and second surface (16,22) of the mouth (23) are arranged with a predetermined gap that corresponds to the thickness of a part of the trim element (2).

10. A vehicle (1) according to any preceding claim wherein the mouth (23) is shaped to guide an object into the mouth (23).

11. A vehicle (1) according to any one of the preceding claims comprising one or more projections (17) housed in the mouth (23) of the coupling (9) for contacting the trim element (2).

12. A vehicle (1) according to claim 11 wherein the or each projection (17) is formed on the first surface of the mouth (23); and/or wherein each projection comprises a curved guide portion (24).

13. A vehicle (1) according to claim 11 or 12 wherein two projections (17) are provided oppositely about the central axis of the coupling (9) and wherein the tooth (21) sits in between the two projections (17).

14. A vehicle (1) according to any one of the preceding claims, wherein the coupling (9) is arranged so that when it is coupled to the trim element (2) the first engagement portion (18) is located closer to the trim element (2) than the second engagement portion (25).

15. A vehicle (1) according to any one of the preceding claims, wherein the bumper cover (4,5) is coupled to the coupling (9) by a bumper cover attachment strip (12).

## Patentansprüche

1. Fahrzeug (1), umfassend:
ein dekoratives Verkleidungselement (2);
eine Stoßstangenabdeckung (4, 5); und
ein oder mehr Kopplungselemente (9),
wobei jedes Kopplungselement (9) lösbar die Stoßstangenabdeckung (4, 5) mit dem Verkleidungselement (2) derart koppelt, dass die Stoßstangenabdeckung (4, 5) mit dem Verkleidungselement ausgerichtet ist, und wobei jedes Kopplungselement (9) dazu ausgelegt ist, die Stoßstangenabdeckung (4, 5) von dem Verkleidungselement (2) zu lösen, wenn die Stoßstangenabdeckung (4, 5) eine Aufprallkraft über einem vorbestimmten Pegel empfängt; wobei das oder jedes Kopplungselement (9) einen Körper umfasst, und wobei der Körper Folgendes umfasst:
ein Loch (19) zum Aufnehmen eines Stoßstangenabdeckungsanbringungsmittels (13) zum Anbringen des Kopplungselements (9) an der Stoßstangenabdeckung (4, 5) oder einem Teil, das mit der Stoßstangenabdeckung (4, 5) verbunden ist; und
einen Mund (23) mit einer Öffnung zum Angreifen an einem Teil des Verkleidungselements (2) und umfassend eine erste Oberfläche (16) und eine entgegengesetzte zweite Oberfläche (22),
eine Aussparung (20), die in der zweiten Oberfläche (22) gebildet ist, und
einen federnden Zahn (21) zum Angreifen an dem Verkleidungselement (2), wobei der Zahn (21) an einem Ende an dem Kopplungselement (9) angebracht ist und ein freies Ende hat, das sich biegen und in die Aussparung (20) hinein krümmen kann; wobei der Zahn (21) eine gestaltete Oberfläche zum Kontaktieren eines Teils des Verkleidungselements umfasst; wobei die gestaltete Oberfläche einen ersten Angriffsbereich (18) und einen zweiten Angriffsbereich (25) umfasst; wobei der erste und der zweite Angriffsbereich (19, 25) gekrümmt sind; und wobei die Krümmung des zweiten Angriffsbereichs (25) steiler als die Krümmung des ersten Angriffsbereichs (18) ist.

2. Fahrzeug (1) nach Anspruch 1, wobei das Verkleidungselement (2) eine Kühlerverkleidung (3) umfasst, und wobei die Stoßstangenabdeckung (4, 5) an der Kühlerverkleidung (3) angebracht ist.

3. Fahrzeug (1) nach einem der vorhergehenden Ansprüche, wobei die Stoßstangenabdeckung (4, 5) eine vordere Stoßstangenabdeckung (4) ist.

4. Fahrzeug (1) nach einem der vorhergehenden Ansprüche, wobei die Stoßstangenabdeckung (4, 5) über das distale Ende des Verkleidungselements (2) hinaus vorsteht.

5. Fahrzeug (1) nach einem der vorhergehenden Ansprüche, ferner umfassend eine Mehrzahl von Kopplungselementen (9).

6. Fahrzeug (1) nach einem der vorhergehenden Ansprüche, wobei die Stoßstangenabdeckung (4, 5) durch mehrere Kopplungselemente (9) an dem Verkleidungselement (2) angebracht ist.

7. Fahrzeug (1) nach einem der vorhergehenden Ansprüche, wobei die Stoßstangenabdeckung (4, 5) oder das mit der Stoßstangenabdeckung (4, 5) verbundene Teil mittels einer Schraube an dem Loch (19) angebracht ist.

8. Fahrzeug (1) nach einem der vorhergehenden Ansprüche, wobei der Mund (23) im Wesentlichen U-förmig ist.

9. Fahrzeug (1) nach einem der vorhergehenden Ansprüche, wobei die erste und die zweite Oberfläche (16, 22) des Munds (23) mit einem vorbestimmten Spalt angeordnet sind, der der Dicke eines Teils des Verkleidungselements (2) entspricht.

10. Fahrzeug (1) nach einem der vorhergehenden Ansprüche, wobei der Mund (23) dazu geformt ist, ein Objekt in den Mund (23) hinein zu führen.

11. Fahrzeug (1) nach einem der vorhergehenden Ansprüche, umfassend einen oder mehr Vorsprünge (17), die in dem Mund (23) des Kopplungselements (9) aufgenommen sind, um das Verkleidungselement (2) zu kontaktieren.

12. Fahrzeug (1) nach Anspruch 11, wobei der oder jeder Vorsprung (17) auf der ersten Oberfläche des Munds (23) gebildet ist; und/oder wobei jeder Vorsprung einen gekrümmten Führungsbereich (24) umfasst.

13. Fahrzeug (1) nach Anspruch 11 oder 12, wobei zwei Vorsprünge (17) entgegengesetzt um die zentrale Achse des Kopplungselements (9) herum vorgesehen sind, und wobei der Zahn (21) zwischen den zwei Vorsprüngen (17) sitzt.

14. Fahrzeug (1) nach einem der vorhergehenden Ansprüche, wobei das Kopplungselement (9) derart angeordnet ist, dass wenn es mit dem Verkleidungselement (2) gekoppelt ist, der erste Angriffsbereich (18) näher bei dem Verkleidungselement (2) lokalisiert ist als der zweite Angriffsbereich (25).

15. Fahrzeug (1) nach einem der vorhergehenden Ansprüche, wobei die Stoßstangenabdeckung (4, 5) mit dem Kopplungselement (9) mittels eines Stoßstangenverkleidungsanbringungsstreifens (12) gekoppelt ist.

## Revendications

1. Véhicule (1), comprenant :
un élément (2) d'enjoliveur décoratif ;
un recouvrement (4, 5) de pare-chocs ; et
un ou plusieurs accouplements (9),
dans lequel chaque accouplement (9) accouple, avec possibilité de libération, le recouvrement (4, 5) de pare-chocs à l'élément (2) enjoliveur, de manière à aligner le recouvrement (4, 5) de pare-chocs sur l'élément enjoliveur et chaque accouplement (9) est agencé pour libérer le recouvrement (4, 5) de pare-chocs de l'élément (2) d'enjoliveur, lorsque le recouvrement (4, 5) de pare-chocs reçoit une force d'impact au-dessus d'un niveau déterminé à l'avance, le ou chaque accouplement (9) comprenant un corps et le corps comprenant :
un trou (19) pour recevoir un moyen (13) de fixation d'un recouvrement de pare-chocs pour fixer l'accouplement (9) au recouvrement (4, 5) de pare-chocs ou à une partie reliée au recouvrement (4, 5) de pare-chocs ; et
une embouchure (23) ayant une ouverture pour s'enclencher avec une partie de l'élément (2) enjoliveur et comprenant une première surface (16) et une seconde surface (22) opposée,
une cavité (20) formée dans la seconde surface (22), et
une dent (21) élastique pour s'enclencher avec l'élément (2) enjoliveur, la dent (21) étant fixée à une extrémité à l'accouplement (9) et ayant une extrémité libre, qui peut fléchir et se courber dans la cavité (20) ; la dent (21) comprenant une surface conformée pour être en contact avec une partie de l'élément enjoliveur ; la surface conformée comprenant une première partie (18) d'enclenchement et une deuxième partie (25) d'enclenchement ; la première et la deuxième parties (19, 25) d'enclenchement étant incurvées ; et la courbe de la deuxième partie (25) d'enclenchement étant plus raide que la courbe de la première partie (18) d'enclenchement.

2. Véhicule (1) suivant la revendication 1, dans lequel l'élément (2) enjoliveur comprend une coquille (3) de radiateur et le recouvrement (4, 5) de pare-chocs est fixé à la coquille (3) de radiateur.

3. Véhicule (1) suivant l'une quelconque des revendications précédentes, dans lequel le recouvrement (4, 5) de pare-chocs est un recouvrement (4) de pare-chocs avant.

4. Véhicule (1) suivant l'une quelconque des revendications précédentes, dans lequel le recouvrement (4, 5) de pare-chocs fait saillie au-delà de l'extrémité distale de l'élément (2) enjoliveur.

5. Véhicule (1) suivant l'une quelconque des revendications précédentes, comprenant, en outre, une pluralité d'accouplements (9).

6. Véhicule (1) suivant l'une quelconque des revendications précédentes, dans lequel le recouvrement (4, 5) de pare-chocs est fixé à l'élément (2) enjoliveur par de multiples accouplements (9).

7. Véhicule (1) suivant l'une quelconque des revendications précédentes, dans lequel le recouvrement (4, 5) de pare-chocs ou la partie reliée au recouvrement (4, 5) de pare-chocs est fixé au trou (19) par une vis.

8. Véhicule (1) suivant l'une quelconque des revendications précédentes, dans lequel l'embouchure (23) est sensiblement en forme de U.

9. Véhicule (1) suivant l'une quelconque des revendications précédentes, dans lequel la première et la seconde surfaces (16, 22) de l'embouchure (23) sont disposées à un intervalle déterminé à l'avance, qui correspond à l'épaisseur d'une partie de l'élément (2) enjoliveur.

10. Véhicule (1) suivant l'une quelconque des revendications précédentes, dans lequel l'embouchure (23) est conformée pour guider un objet dans l'embouchure (23).

11. Véhicule (1) suivant l'une quelconque des revendications précédentes, comprenant une ou plusieurs saillies (17) logées dans l'embouchure (23) de l'accouplement (9) pour être en contact avec l'élément (2) enjoliveur.

12. Véhicule (1) suivant la revendication 11, dans lequel la ou chaque saillie (17) est formée sur la première surface de l'embouchure (23) ; et/ou dans lequel chaque saillie comprend une partie (24) incurvée de guidage.

13. Véhicule (1) suivant la revendication 11 ou 12, dans lequel deux saillies (17) sont prévues en opposition autour de l'axe central de l'accouplement (9) et dans lequel la dent (21) se situe entre les deux saillies (17).

14. Véhicule (1) suivant l'une quelconque des revendications précédentes, dans lequel l'accouplement (9) est agencé de manière à ce que, lorsqu'il est accouplé à l'élément (2) enjoliveur, la première partie (18) d'enclenchement est placée plus près de l'élément (2) enjoliveur que ne l'est la deuxième partie (25) d'enclenchement.

15. Véhicule (1) suivant l'une quelconque des revendications précédentes, dans lequel le recouvrement (4, 5) de pare-chocs est accouplé à l'accouplement (9) par une bande (12) de fixation d'un recouvrement de pare-chocs.
